**Europäisches Patentamt**

**European Patent Office**

**Office européen des brevets**

(19)

(11) Veröffentlichungsnummer: **0 328 703 B1**

(12) **EUROPÄISCHE PATENTSCHRIFT**

(45) Veröffentlichungstag der Patentschrift: **16.10.91**

(51) Int. Cl.5: **G01L 11/00, G01L 1/24**

(21) Anmeldenummer: **88102301.4**

(22) Anmeldetag: **17.02.88**

(54) **Messverfahren zum ortsaufgelösten Messen von Drücken.**

(43) Veröffentlichungstag der Anmeldung:
**23.08.89 Patentblatt 89/34**

(45) Bekanntmachung des Hinweises auf die
Patenterteilung:
**16.10.91 Patentblatt 91/42**

(84) Benannte Vertragsstaaten:
**AT BE CH DE FR GB IT LI LU NL SE**

(56) Entgegenhaltungen:
WO-A-86/05273      DE-A- 2 529 475
DE-A- 3 428 980      GB-A- 2 058 394
GB-A- 2 183 026      US-A- 4 408 829

(73) Patentinhaber: **Brunner, Wolfgang**
**brunner & zech Postfach 1143**
**W-7972 Isny im Allgäu(DE)**

Patentinhaber: **von Zech, Ludwig**
**brunner & zech&Postfach 1143**
**W-7972 Isny im Allgäu(DE)**

(72) Erfinder: **Brunner, Wolfgang**
**brunner & zech Postfach 1143**
**W-7972 Isny im Allgäu(DE)**
Erfinder: **von Zech, Ludwig**
**brunner & zech&Postfach 1143**
**W-7972 Isny im Allgäu(DE)**

(74) Vertreter: **Säger, Manfred, Dipl.-Ing.**
**Säger & Partner Patentanwälte Postfach 81**
**08 09**
**W-8000 München(DE)**

**Beschreibung**

Die Erfindung betrifft ein Verfahren gemäß dem Oberbegriff des Patentanspruches 1.

Ein solches Verfahren kann beispielsweise für Messungen im Bereich der Medizin, der Orthopädie, der Materialprüfung, der Lauffächenkontrolle von Fahrzeugbereifungen, Homogenitätsmessungen an plastischen Schichten und der Messung von Aufprallvorgängen eingesetzt werden. Zum Beispiel kann die Druckverteilung eines Fusses beim Gehen mit hoher örtlicher und zeitlicher Auflösung gemessen werden.

Aus der WO-A1 86-5273 ist eine Vorrichtung zum Messen von Drücken mittels Lichtleiterfasern bekannt. Das hierbei zum Einsatz kommende Meßverfahren beruht auf einer deformationsabhängigen Intensitätsabschwächung in der Faser.

Aus der DE-PS 25 29 475 ist eine matrixartige Anordnung zum Messen der ortsaufgelösten Messung von Drücken bekannt. Hierbei werden zeilen- und spaltenweise elektrische Signale an Sensoren, die druckabhängig als Kondensatoren und Widerstände ausgelegt sein können, angelegt und ausgelesen. Ein hoher Störabstand sowie eine hohe Ortsauflösung erscheinen durch das verwendete Kapazitätsprinzip aufwendig.

Der Erfindung liegt deshalb die Aufgabe zugrunde, ein schnelles störungsarmes, zeitlich und örtlich hochauflösendes Meßverfahren zur Bestimmung von Drücken vorzuschlagen.

Diese Aufgabe wird bei einem gattungsgemäßen Meßverfahren gemäß dem Oberbegriff des Patentanspruches 1 erfindungsgemäß durch dessen kennzeichnende Merkmale gelöst.

Durch die Verwendung von Lichtleiterfasern ergibt sich eine unproblematische Meßanordnung, mittels der wegen fehlender Kapazitäten und nicht vorhandenen Einschwingvorgängen eine hohe örtliche und zeitliche Auflösung möglich ist. Hinzu kommt, daß Störpegel wie bei den bekannten Verfahren nicht auftreten, und wenn keine Gummimaterialien verwendet werden, eine Hysterese ebenfalls nicht vorhanden ist.

Zweckmäßige Ausgestaltungen und Weiterbildungen der Erfindung sind in den abhängigen Patentansprüchen gekennzeichnet.

Bevorzugte Ausführungsbeispiele der Erfindung werden unter Bezugnahme auf die Zeichnung näher erläutert. In dieser zeigt:

Figur 1    eine schematische Anordnung zur Durchführung des Meßverfahrens,

Figur 2    die Einzelheit II gemäß Fig. 1,

Figur 3    eine alternative Ausführungsform einer Meßanordnung gemäß Fig. 1,

Figur 4    eine dritte Ausführungsform der Meßanordnung gemäß Fig. 1,

Figur 5    einen Querschnitt V-V gemäß Fig. 1,

Figur 6    einen schematischen Querschnitt durch eine Lichtleiterfaser, und

Figur 7    eine weitere Ausführungsform der Meßanordnung gemäß Fig. 1.

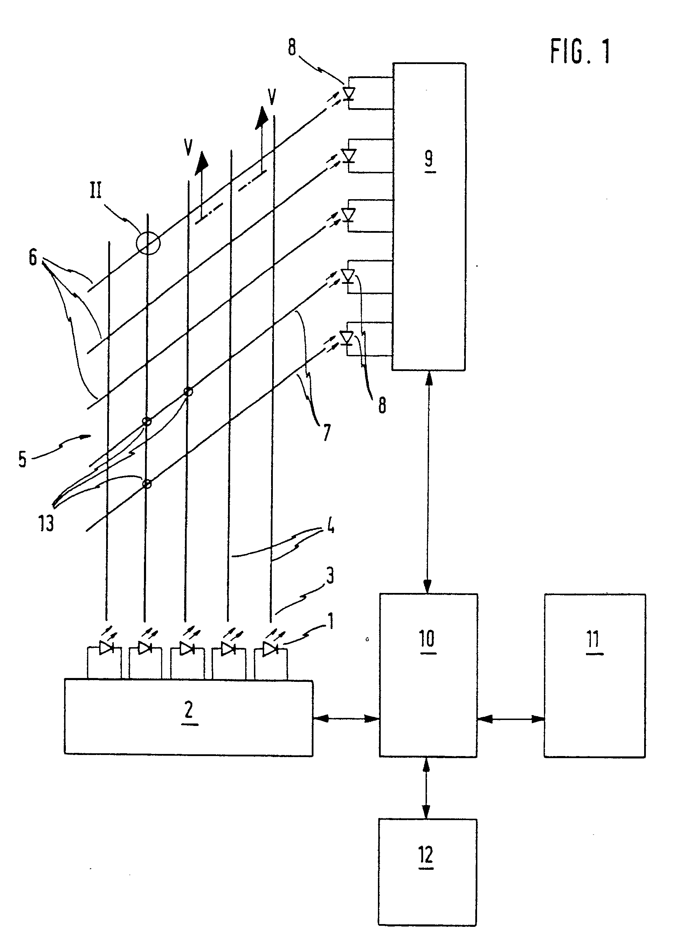

In Figur 1 ist insgesamt eine Steuereinheit 2 mit einzelnen von ihr gesteuerten Sendern 1 zur Abgabe von Licht gezeigt. Jeder Sender 1, z.B. in Form einer LED ist am Ende 3 von Spaltenlichtleiterfasern 4 einer insgesamt mit 5 bezeichneten matrixartigen Meßanordnung angeordnet. Diese Spaltenlichtleiterfasern 4 kreuzen sich mit Zeilenlichtleiterfasern 6. An deren einem Ende 7 sind Lichtdetektoren 8 einer insgesamt mit 9 bezeichneten Ausleseeinheit angeordnet. Diese ist mittels einer Hauptsteuereinheit 10 verbunden, welche die zeitliche Koordination von Steuereinheit 2 und Ausleseeinheit 9 steuert und eine Ausgabeeinheit 11 (z.B. Bildschirm und/oder Drucker) mit den Meßwertdaten versorgt. Zudem können die Daten in einem Speicher 12 abgelegt werden.

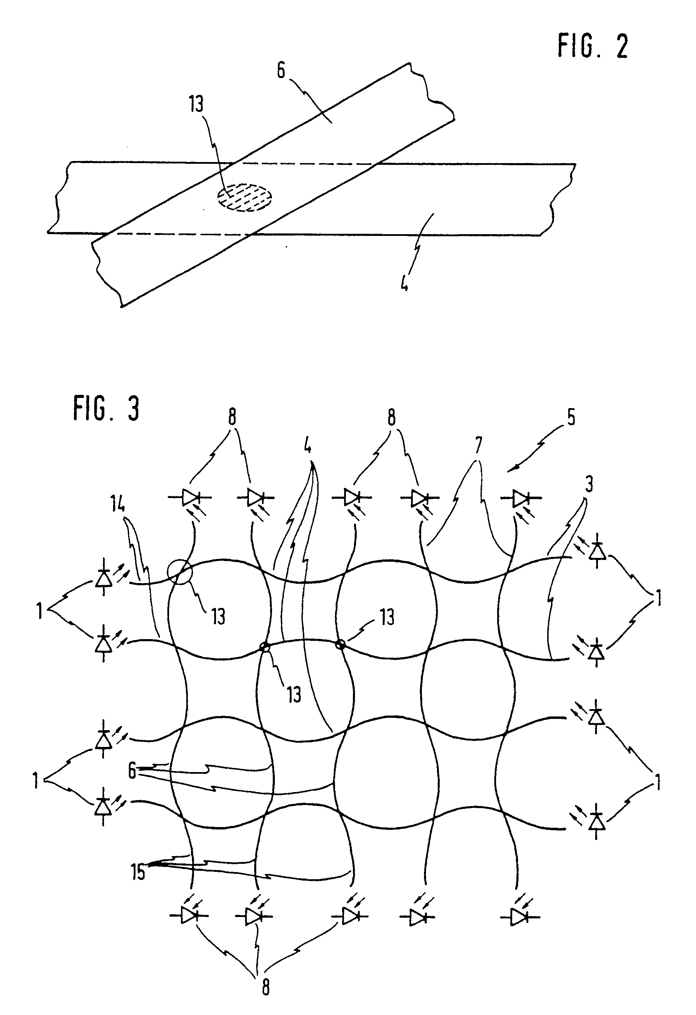

Figur 2 zeigt die Einzelheit II gemäß Fig. 1 näher. Dort ist ersichtlich, daß die Berührungsfläche am Kreuzungspunkt 13 zwischen den Spaltenlichtleiterfasern 4 und den Zeilenlichtleiterfasern 6 in Abhängigkeit von dem an dieser Stelle wirkenden Druck größer oder kleiner wird. Infolgedessen vergrößert sich auch der Bereich, über den von der einspeisenden Spaltenfaser in die Zeilenfaser 6 eingekoppelte Menge an Licht.

Figur 3 zeigt eine weitere Ausführungsform einer matrixartigen Meßanordnung 5. In Abweichung von der Ausbildung gemäß Fig. 1 ist nicht nur auf der Seite 3 der Spaltenlichtleiterfasern 4, sondern auch an dem anderen Ende 14 der Spaltenlichtleiterfasern 4 je ein Sender 1 angeordnet. Demgemäß ist nicht nur auf der einen Seite 7 der Zeilenlichtleiterfasern 6, sondern auch an dem anderen Ende 15 je ein Lichtdetektor 8 angeordnet. Außerdem verläuft zwischen zwei Kreuzungspunkten 13 jede der Lichtleiterfasern nicht linear, sondern gewellt, wenngleich die grobe Erstreckung von Spalten- zu Zeilenlichtleiterfasern rechtwinklig im Gegensatz zu der spitzwinkligen Anordnung gemäß Fig .1 ist.

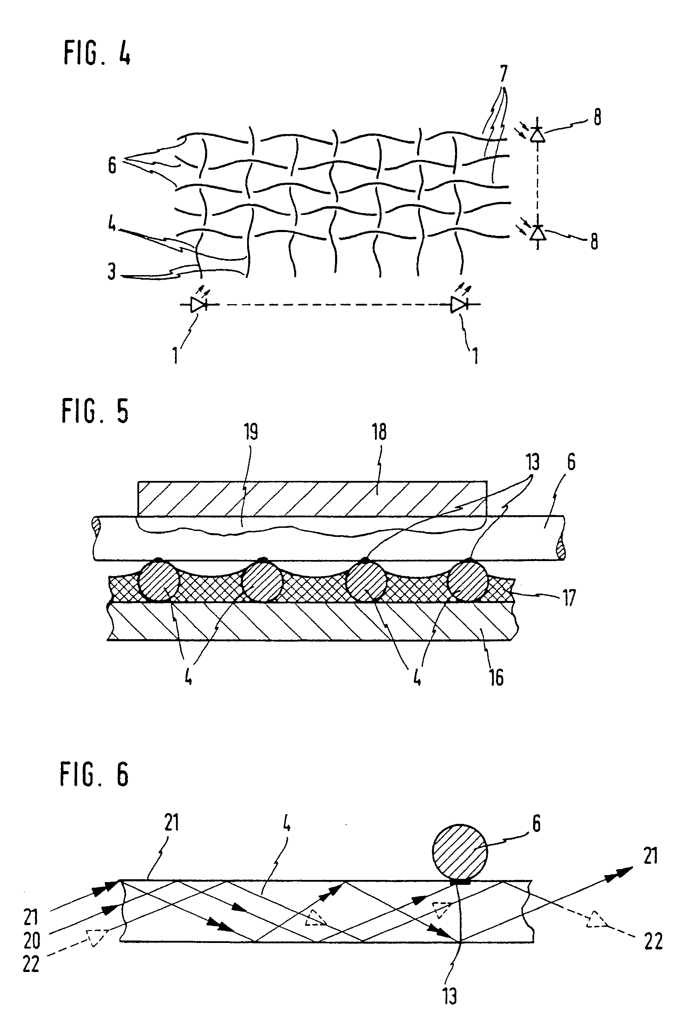

Figur 4 zeigt eine zu Fig. 3 ähnliche Ausbildung, jedoch mit dem Unterschied, daß dort Lichtleiterfasern miteinander verwebt sind.

Figur 5 zeigt einen schematischen Querschnitt durch die Ausbildung der Meßanordnung gemäß Fig. 1. Dort sind beispielsweise die Spaltenlichtleiterfasern 4 auf einer Grundplatte 16 angeordnet und so in eine insgesamt mit 17 bezeichnete Verklebemasse eingebettet und damit so fixiert, daß sie sich mit den dazu querverlaufenden Zeilenlichtleiterfasern 6 unter Bildung der Kreuzungspunkte 13 berühren, wobei die Zeilenlichtleiterfasern 6 ebenfalls an einer elastischen Grundplatte 18 mit einer Verklebemasse 19 festgelegt sind.

Figur 6 zeigt einen Strahlungsverlauf des Lichtes in Lichtleiterfasern mit homogenem Brechungsindex. Der einspeiste Lichtstrahl wird an der Grenzschicht 21 der Lichtleiterfaser 4 totalreflektiert. Dieser Lichtstrahl 20 kann jedoch an dem Kreuzungspunkt 13 in die Zeilenlichtleiterfaser 6 übertreten. Dies gilt jedoch nicht für einen beispielsweise mit einem Doppelpfeil gekennzeichneten Lichtstrahl 21 oder den punktiert gekennzeichneten Lichtstrahl 22.

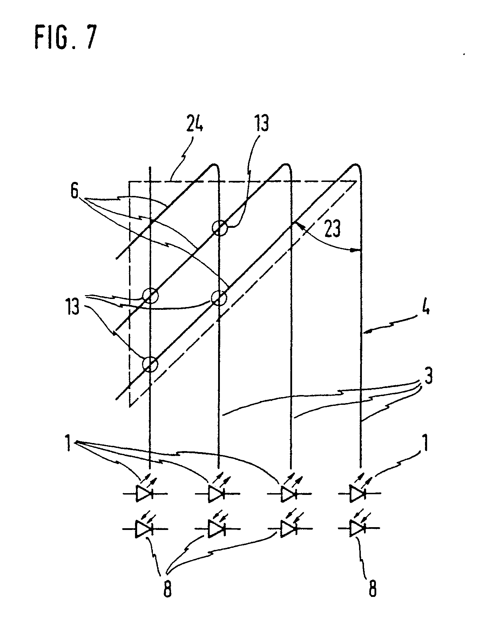

Figur 7 zeigt eine weitere alternative Ausführungsform. Dort sind die Spaltenlichtleiter 4 an ihrem unteren Ende 3 jeweils sowohl mit einem Sender 1 als auch mit einem Lichtdetektor 8 versehen. An dem oberen Ende der Spaltenlichtleiterfasern sind diese unter Bildung der Zeilenlichtleiterfasern 6 um einen spitzen Winkel 23 umgelenkt und bilden in diesem Bereich mit den Spaltenlichtleiterfasern die Kreuzungspunkte 13. Jeweils ein einziger Sender 1 ist an einem Ende 3 eines Spaltenlichtleiters 4 eingeschaltet. Die anderen Sender sind ausgeschaltet, ebenso wie der Lichtdetektor 8, der derselben Spaltenlichtleiterfaser 4 wie der gerade eingeschaltete Sender zugeordnet ist. Durch serielles Einschalten aller anderen Lichtquellen kann ebenfalls auf einer Meßfläche 24, die schematisch als gestricheltes Dreieck gezeichnet ist, die örtliche Druckverteilung festgestellt werden.

## Patentansprüche

1. Meßverfahren zum ortsaufgelösten Messen von Drücken mittels einer matrixartigen Meßanordnung mit sich kreuzenden Zeilen und Spalten von jeweils druckübertragenden Leitern, wobei als Leiter Lichtleiterfasern verwendet werden, **dadurch gekennzeichnet,** daß die Zeilenlichtleiterfasern und die Spaltenlichtleiterfasern so angeordnet sind, daß an deren Kreuzungspunkten örtlich unterschiedliche Drücke verschieden große Berührungsflächen bewirken, und daß in nur einer einzigen Zeilen- oder Spaltenlichtleitfaser Licht von zumindest einem Ende eingespeist und an allen diese Lichtleiterfasern kreuzenden Lichtleiterfasern die an den Kreuzungspunkten eingekoppelte Menge an Licht ausgelesen wird.

2. Verfahren nach Anspruch 1, **dadurch gekennzeichnet,** daß als Lichtleiterfasern solche mit über den Lichtleiterfaserquerschnitt homogenem Brechungsindex Verwendung finden.

3. Verfahren nach Anspruch 1 oder 2, **dadurch gekennzeichnet,** daß sich die kreuzenden Lichtleiterfasern berühren.

4. Verfahren nach einem der Ansprüche 1 bis 3, **dadurch gekennzeichnet,** daß die sich kreuzenden Lichtleiterfasern verwebt sind.

5. Verfahren nach einem der Ansprüche 1 bis 4, **dadurch gekennzeichnet,** daß die Fasern in einem elastischen Material eingebettet sind.

6. Verfahren nach Anspruch 5, **dadurch gekennzeichnet,** daß das Material das Verrutschen der sich nicht kreuzenden Lichtleiterfasern verhindert, das Berühren der sich Kreuzenden aber gestattet.

7. Verfahren nach einem der Ansprüche 1 bis 6, **dadurch gekennzeichnet,** daß die Lichtleiterfasern zwischen den Kreuzungspunkten zumindest in einer Welle gekrümmt verlaufen.

8. Verfahren nach einem der Ansprüche 1 bis 7, **dadurch gekennzeichnet,** daß der Winkel zwischen den Achsen der Lichtleiterfasern zwischen 45° und 90° beträgt.

9. Verfahren nach einem der Ansprüche 1 bis 8, **dadurch gekennzeichnet,** daß das Auslesen an allen Spalten- oder Zeilenlichtleiterfasern einzeln oder in Gruppen gleichzeitig oder sequentiell erfolgt.

10. Verfahren nach einem der Ansprüche 1 bis 9, **dadurch gekennzeichnet,** daß an beiden Enden jeder Lichtleiterfaser Licht eingespeist wird.

11. Verfahren nach einem der Ansprüche 1 bis 10, **dadurch gekennzeichnet,** daß das Licht mittels LED's oder schneller Laserdioden als Sender eingespeist wird.

12. Verfahren nach einem der Ansprüche 1 bis 11, **dadurch gekennzeichnet,** daß das Licht mittels Lichtdetektoren ausgelesen wird.

13. Verfahren nach einem der Ansprüche 1 bis 12, **dadurch gekennzeichnet,** daß das Licht an beiden Enden einer Lichtleiterfaser ausgelesen wird.

14. Verfahren nach Anspruch 13, **dadurch gekennzeichnet,** daß als Detektoren Pin-Dioden Verwendung finden.

15. Verfahren nach einem der Ansprüche 1 bis 14, **dadurch gekennzeichnet,** daß an nur einem Ende einer Lichtleiterfaser je ein Sender und je ein Lichtdetektor angeordnet sind und daß nur ein einziger Sender jeweils Licht aussendet und alle - bis auf den zu diesem Sender gehörigen - Lichtdetektoren das eingekoppelte Licht messen.

16. Verfahren nach Anspruch 15, **dadurch gekennzeichnet,** daß an dem einen Ende der Spalten Lichtleiterfasern die Sender und Lichtdetektoren sitzen und am anderen spaltenseitigen Ende der Lichtleiterfasern diese unter Bildung der Zeilenlichtleiterfasern um einen spitzen Winkel abgebogen zurückgeführt sind.

17. Verfahren nach einem der Ansprüche 1 bis 16, **dadurch gekennzeichnet,** daß das Einspeisen und das Auslesen der Meßsignale durch Verwendung langer Lichtleiterbündel zu einem räumlich entfernt liegenden Ort erfolgen kann.

## Claims

1.  A method of measurement for spatially resolved measurement of pressures with the aid of a matrix-type measuring arrangement with crossing rows and columns of conductors transmitting pressure in each case, in which optical fibres are used as the conductors, **characterised in that** the row optical fibres and the column optical fibres are arranged so that at their crossing points spatially different pressures cause contact surfaces of different size and that in only one single row or column optical fibre light is fed in from at least one end and at all optical fibres crossing this optical fibre the quantity of light coupled in at the crossing points is read out.

2.  A method according to claim 1, **characterised in that** as optical fibres there are used those having an homogenous refractive index over the cross section of the optical fibre.

3.  A method according to claim 1 or 2, **characterised in that** the crossing optical fibres touch.

4.  A method according to any one of claims 1 to 3 **characterised in that** the crossing optical fibres are woven.

5.  A method according to any one of claims 1 to 4, **characterised in that** the fibres are embedded in an electrical material.

6.  A method according to claim 5, **characterised in that** the material prevents misalignment of the optical fibres which do not cross, but allows touching of ones which cross.

7.  A method according to any one of claims 1 to 6, **characterised in that** the optical fibres are curved in at least one wave between the crossing points.

8.  A method according to any one of claims 1 to 7, **characterised in that** the angle between the axes of the optical fibres is between 45 and 90 degrees.

9.  A method according to any one of claims 1 to 8, **characterised in that** reading out takes place simultaneously or sequentially, individually or in groups, at all column or row optical fibres.

10. A method according to any one of claims 1 to 9, **characterised in that** light is fed in at both ends of each optical fibre.

11. A method according to any one of claims 1 to 10, **characterised in that** the light is fed in by means of LEDs or fast laser diodes as transmitters.

12. A method according to any one of claims 1 to 11, **characterised in that** the light is read out by means of light detectors.

13. A method according to any one of claims 1 to 12, **characterised in that** the light is read out at both ends of an optical fibre.

14. A method according to claim 13, **characterised in that** pin diodes are used as detectors.

15. A method according to any one of claims 1 to 14, **characterised in that** in each case a transmitter and a light detector are arranged at only one end of an optical fibre and that only a single transmitter sends out light in each case and all light detectors - except for the one belonging to this transmitter - measure the coupled-in light.

16. A method according to claim 15, **characterised in that** the transmitters and light detectors are located at one end of the column optical fibres and the other ends of the column optical fibres are directed back bent through an acute angle to form the row optical fibres.

17. A method according to any one of claims 1 to 16, **characterised in that** feeding in and reading out the measured signals can take place at a spatially removed location by using relatively long bundles of optical conductors.

## Revendications

1. Procédé de mesure destiné à mesurer des pressions de manière topographiquement discriminée au moyen d'un dispositif de mesure de type matriciel comportant des lignes et des colonnes qui se croisent de conducteurs qui transmettent respectivement les pressions, des fibres photoconductrices étant utilisées comme conducteurs, caractérise par le fait que les fibres photoconductrices des lignes et les fibres photoconductrices des colonnes sont disposées de telle sorte qu'en leurs points de croisement des pressions localement différentes génèrent des surfaces de contact de grandeurs différentes et que la lumière est introduite dans une seule fibre photoconductrice de lignes ou de colonnes par au moins une extrémité et que, sur toutes les fibres photoconductrices croisent ces fibres photoconductrices, la quantité de lumière accumulée aux points de croisement est extraite et lue.

2. Procédé selon la revendication 1, caractérisé par le fait que les fibres photoconductrices utilisées présentent un indice de réfraction homogène sur toutes leurs sections.

3. Procédé selon la revendication 1 ou 2, caractérisé par le fait que les fibres photoconductrices qui se croisent se touchent.

4. Procédé selon l'une des revendications 1 à 3, caractérisé par le fait que les fibres photoconductrices qui se touchent sont entrelacées.

5. Procédé selon l'une des revendications 1 à 4, caractérisé par le fait que les fibres sont noyées dans un matériau élastique.

6. Procédé selon la revendication 5, caractérisé par le fait que le matériau empêche le glissement des fibres photoconductrices qui ne se croisent pas mais permet le contact entre celles qui se croisent.

7. Procédé selon l'une des revendications 1 à 6, caractérisé par le fait que les fibres photoconductrices suivent, entre les points de croisement, un trajet courbe formant au moins une onde.

8. Procédé selon l'une des revendications 1 à 7, caractérisé par le fait que l'angle entre les axes des fibres photoconductrices se situe entre 45 et 90$^\circ$.

9. Procédé selon l'une des revendications 1 à 8, caractérisé par le fait que l'extraction sur toutes les fibres photoconductrices de colonnes ou de lignes s'effectue de manière distincte ou en groupes, simultanément ou séquentiellement.

10. Procédé selon l'uns des revendications 1 à 9, caractérisé par le fait que de la lumière est introduite sur les deux extrémités de chaque fibre photoconductrice.

11. Procédé selon l'une des revendications 1 à 10, caractérisé par le fait que la lumière est introduite au moyen de diodes électroluminescentes ou de diodes laser rapides servant d'émetteurs.

12. Procédé selon l'une des revendications 1 à 11, caractérisé par le fait que la lumière est extraite et lue au moyen de détecteurs de luminance.

13. Procédé selon l'une des revendications 1 à 12, caractérisé par le fait que la lumière est extraite aux deux extrémités d'une fibre photoconductrice.

14. Procédé selon la revendication 13, caractérisé par le fait que des diodes PIN sont utilisées pour servir de détecteurs.

15. Procédé selon l'une des revendications 1 à 14, caractérisé par le fait que sur une seule extrémité d'une fibre photoconductrice sont disposés respectivement un émetteur et un détecteur de luminance et que, respectivement un seul émetteur émet de la lumière et que tous les détecteurs de luminance (sauf celui associé à cet émetteur) mesurent la lumière accumulée.

16. Procédé selon la revendication 15, caractérisé par le fait que sur une extrémité des fibres photoconductrices à colonnes sont placés les émetteurs et les détecteurs de luminance et que sur l'autre extrémité, côté colonne des fibres photoconductrices, ces dernières sont repliées à angle aigu en formant sur leur trajet de retour les fibres photoconductrices de lignes.

17. Procédé selon l'une des revendication 1 à 16, caractérisé par le fait que l'introduction et l'extraction des signaux de mesure peuvent s'effectuer en utilisant un faisceau de photoconducteur long conduisant vers un emplacement situé à distance.

EP 0 328 703 B1

FIG. 1

6

FIG. 2

FIG. 3

FIG. 4

FIG. 5

FIG. 6

FIG. 7